# FASCICULE DE BREVET EUROPEEN

(11) **EP 1 205 095 B1**
(45) Date de publication et mention de la délivrance du brevet: **08.06.2005**
(21) Numéro de dépôt: 02002942.7
(22) Date de dépôt: 14.10.1997
(51) Int. Cl.: A01B 15/14

(54) **Charrue**
Pflug
Plough

(30) Priorité: 18.10.1996 FR 9612864
(43) Date de publication de la demande: 15.05.2002
(62) Demande divisionnaire de: 97440096.2
(73) Titulaire: Kuhn-Huard S.A., 44142 Chateaubriant Cedex (FR)
(72) Inventeur: Perret, Louis, 44110 Chateaubriant (FR); Gentilhomme, Guy, 44110 Louisfert (FR)
(74) Mandataire: Andres, Jean-Claude

(56) Documents cités:
- EP-A- 0 149 488
- EP-A- 0 200 489
- EP-A- 0 284 470
- EP-A- 0 333 545
- EP-A- 0 358 537
- EP-A- 0 502 762
- FR-A- 1 397 999
- FR-A- 2 517 506
- FR-A- 2 551 305
- GB-A- 2 166 932

## Description

La présente invention se rapporte à une charrue comportant
- un avant-train destiné à être lié à un véhicule moteur,
- un arrière-train comportant une structure porteuse sur laquelle sont articulés des corps de labour autour d'un axe d'articulation respectif de sorte à pouvoir occuper au moins deux positions de largeur de coupe différentes,
- un dispositif de liaison liant l'arrière-train à l'avant-train et comprenant :
   * une bielle principale articulée sur l'avant-train autour d'un premier axe de pivotement et sur l'arrière-train autour d'un deuxième axe de pivotement, et
   * une première bielle auxiliaire articulée sur l'avant-train autour d'un premier axe de pivotement avant, et une deuxième bielle auxiliaire articulée sur l'avant-train autour d'un deuxième axe de pivotement avant et sur l'arrière-train autour d'un deuxième axe de pivotement arrière,
les trois bielles étant disposées de telle façon que la bielle principale converge vers l'arrière avec la deuxième bielle auxiliaire en un point de convergence virtuel arrière.

On connaît une telle charrue, par exemple par le document EP 0 540 408. Cette charrue connue comporte un arrière-train lié à un avant-train au moyen d'un dispositif de liaison comportant :
- une bielle principale articulée sur l'avant-train autour d'un premier axe de pivotement et sur l'arrière-train autour d'un deuxième axe de pivotement,
- une première bielle auxiliaire réglable en longueur articulée sur l'avant-train autour d'un premier axe de pivotement avant et sur l'arrière-train autour d'un premier axe de pivotement arrière,
- une deuxième bielle auxiliaire réglable en longueur articulée sur l'avant-train autour d'un deuxième axe de pivotement avant et sur l'arrière-train autour d'un deuxième axe de pivotement arrière.

La bielle principale converge d'une part vers l'arrière avec la deuxième bielle auxiliaire en un point de convergence virtuel situé en arrière et d'autre part vers l'avant avec la première bielle auxiliaire en un point de convergence virtuel situé en avant de la charrue.

L'arrière-train est doté de corps de labour articulés sur une structure porteuse autour d'un axe d'articulation respectif. A cet effet, on peut faire varier la largeur entre les corps de labour en pivotant, d'une part chaque corps de labour autour de son axe d'articulation et en agissant d'autre part sur la deuxième bielle auxiliaire de sorte à compenser angulairement la variation angulaire des corps de labour.

Pour effectuer le réglage du déport latéral et du devers de pointe, on agit simplement sur la première bielle auxiliaire.

Pour modifier le réglage du déport latéral, afin d'adapter la charrue à une nouvelle voie du tracteur, on agit simultanément sur les deux bielles auxiliaires en raccourcissant l'une des bielles auxiliaires de la même longueur que l'on rallonge l'autre.

On notera que, après un réglage de la largeur de travail, il faut réajuster le réglage du déport latéral et du devers de pointe en agissant sur la première bielle auxiliaire.

Cette charrue connue fait appel à des réglages qui dépendent les uns des autres ce qui complique sa mise en oeuvre.

En outre, cette charrue connue présente, du fait de l'implantation des différentes bielles, un arrière-train relativement imposant ce qui se traduit par une charrue relativement lourde et onéreuse.

Le but de la présente invention est d'améliorer cette charrue connue en simplifiant notamment sa mise en oeuvre tout en cherchant à obtenir un coût de revient modeste.

A cet effet, une charrue selon la présente idée inventive est caractérisée en ce que :
- la première bielle auxiliaire est articulée sur la bielle principale autour d'un premier axe de pivotement arrière,
- la deuxième bielle auxiliaire est de longueur fixe et son deuxième axe de pivotement arrière peut être placé dans au moins deux positions distinctes sensiblement centrées autour du deuxième axe de pivotement, chaque position de son deuxième axe de pivotement arrière correspondant à une position de largeur de coupe respective du corps de labour.

Grâce à ces caractéristiques, le réglage de la largeur de travail est indépendant du réglage du déport latéral et du devers de pointe, ce qui permet d'agir sur l'un des réglages sans avoir à réajuster l'autre réglage. En sus, l'agencement des différentes bielles de la charrue selon l'invention permet d'avoir un arrière-train relativement léger.

L'invention concerne également les caractéristiques additionnelles suivantes:
- la première bielle auxiliaire est de longueur réglable pour le réglage du déport latéral et du devers de pointe,
- le premier axe de pivotement arrière peut occuper plusieurs positions distinctes sur la bielle principale pour le réglage du déport latéral et du devers de pointe,
- l'arrière-train présente un certain nombre de trous centrés autour du deuxième axe de pivotement et destinés à recevoir le deuxième axe de pivotement arrière de manière à pouvoir pivoter l'arrière-train dans un certain nombre de positions autour dudit deuxième axe de pivotement,
- le premier axe de pivotement avant et le deuxième axe de pivotement avant peuvent occuper plusieurs positions distinctes sur ledit avant-train, chaque position correspondant à une plage respective d'entrepneus de véhicules moteurs auxquels est destinée à être liée la charrue,
- l'avant-train comporte trois trous destinés à recevoir le premier axe de pivotement avant et le deuxième axe de pivotement avant, le trou intérieur et le trou médian servant pour un véhicule moteur avec un entrepneu plus large, tandis que le trou médian et le trou extérieur servant pour un véhicule moteur avec un entrepneu moins large,
- les différents axes de pivotement sont, en position de travail, sensiblement verticaux.

D'autres objets et caractéristiques ressortiront de la description ci-après avec références aux dessins annexés qui représentent à titre d'exemples non limitatifs, quelques formes de réalisation de la charrue selon l'invention.

Sur ces dessins :
- la figure 1 représente, selon une forme de réalisation, une charrue selon l'invention vue de dessus,
- la figure 2 représente, selon une autre forme de réalisation, une charrue selon l'invention vue de dessus,

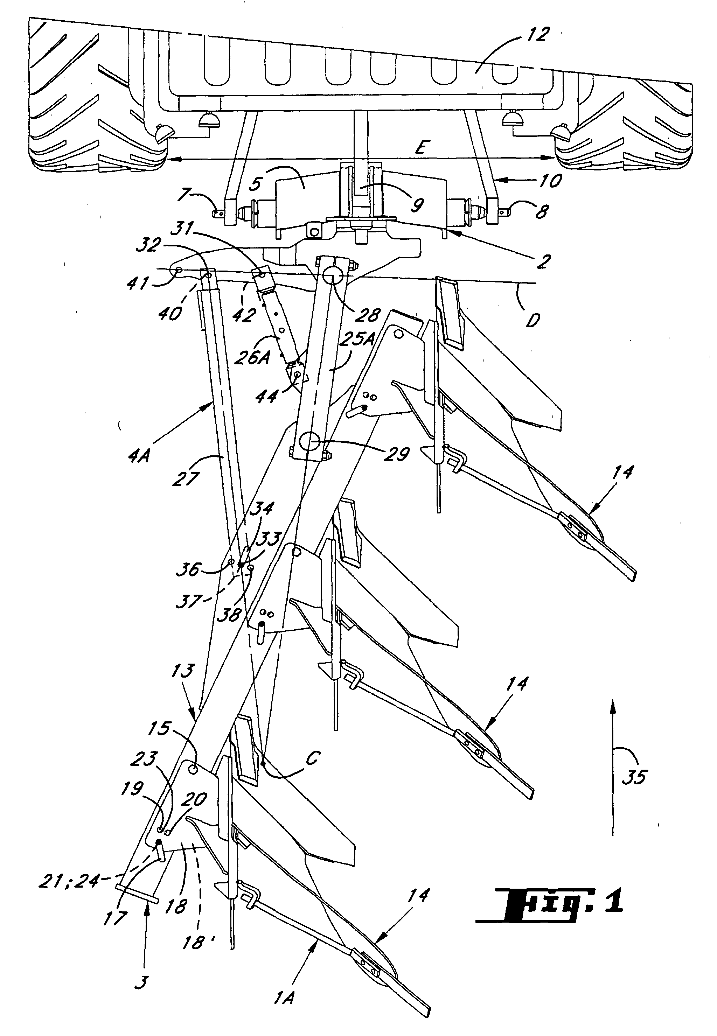

La charrue (1A) représentée sur la figure 1 est une charrue à largeurs multiples qui comporte dans les grandes lignes un avant-train (2), un arrière-train (3) et un dispositif de liaison (4A) liant ledit arrière-train (3) audit avant-train (2).

L'avant-train (2) comporte selon l'exemple représentée une tête d'attelage (5) munie de deux points d'attelage inférieurs (7, 8) et un point d'attelage supérieur (9) au moyen desquels la charrue (1A) est liée au dispositif de relevage (10) d'un véhicule moteur (12).

L'arrière-train (3) quant à lui comporte une structure porteuse (13) sur laquelle sont liés des corps de labour (14).

Chaque corps de labour (14) est lié à la structure porteuse (13) au moyen d'un axe d'articulation (15) et d'une broche (17) s'étendant chacun au moins sensiblement verticalement. Selon l'exemple représenté, chaque corps de labour (14) comporte deux ailes (18, 18') à l'intérieur desquelles s'étend partiellement la structure porteuse (13), l'axe d'articulation (15) et la broche (17) s'étendant de part en part au travers desdites ailes (18, 18') et de ladite structure porteuse (13).

On notera que chaque corps de labour (14) peut être pivoté autour de son axe d'articulation (15) dans trois positions différentes, chaque position correspondant à une largeur de coupe.

A cet effet, les ailes (18, 18') de chaque corps de labour (14) comporte trois trous (19, 20, 21) destinés à collaborer avec deux trous (23, 24) respectifs prévus dans la structure porteuse (13). Chaque trou (19, 20, 21, 23, 24) étant destiné à recevoir la broche (17), ce qui permet de fixer chaque corps de labour (14) à ladite structure porteuse (13) dans les trois positions différentes correspondant chacune à une largeur de coupe.

Le dispositif de liaison (4A) quant à lui comporte une bielle principale (25A) et deux bielles auxiliaires (26A, 27).

La bielle principale (25A) est articulée d'une part sur l'avant-train (2) autour d'un premier axe de pivotement (28) au moins sensiblement vertical et d'autre part sur l'arrière-train (3) autour d'un deuxième axe de pivotement (29) au moins sensiblement vertical.

La première bielle auxiliaire (26A) est de longueur réglable permettant, selon l'exemple représenté, de varier la longueur de ladite première bielle auxiliaire (26A) de manière continue. Ladite première bielle auxiliaire (26A) est articulée d'une part sur l'avant-train (2) autour d'un premier axe de pivotement avant (31) au moins sensiblement vertical, et d'autre part sur la bielle principale (25A) autour d'un premier axe de pivotement arrière (44) au moins sensiblement vertical.

La deuxième bielle auxiliaire (27) quant à elle, est de longueur fixe et est d'une part articulée sur l'avant-train (2) autour d'un deuxième axe de pivotement avant (32) au moins sensiblement vertical et d'autre part sur l'arrière-train (3) autour d'un deuxième axe de pivotement arrière (33) au moins sensiblement vertical.

On remarquera que le premier axe de pivotement (28) liant la bielle principale (25A) à l'avant-train (2), le premier axe de pivotement avant (31) liant la première bielle auxiliaire (26A) audit avant-train (2), et le deuxième axe de pivotement avant (32) liant la deuxième bielle auxiliaire (27) audit avant-train (2) sont, selon une vue de dessus, au moins sensiblement situés sur une droite (D) qui s'étend au moins sensiblement orthogonalement à la direction d'avance (35).

A la lumière de la figure 1, on voit encore que la bielle principale (25A) converge vers l'arrière avec la deuxième bielle auxiliaire (27) en un point de convergence virtuel arrière (C).

On remarquera encore que la structure porteuse (13) de l'arrière-train (3) comporte trois trous (36, 37, 38) centrés autour du deuxième axe de pivotement (29) liant la bielle principale (25A) à l'arrière-train (3). Chacun de ces trous (36, 37, 38) est destiné à recevoir le deuxième axe de pivotement arrière (33) liant la deuxième bielle auxiliaire (27) à l'arrière-train (3), ce qui permet de pivoter l'arrière-train (3) autour du deuxième axe de pivotement (29) dans trois positions différentes pour compenser angulairement la variation angulaire des corps de labour (14) provoquée par le changement d'une largeur de travail à une autre.

Chaque position de l'arrière-train (3), en pivotant autour du deuxième axe de pivotement (29), correspond à une position des corps de labour (14) et donc à une largeur de coupe.

Selon l'exemple représenté, le deuxième axe de pivotement arrière (33) est une broche (34) pouvant aisément être retirée des trous (36, 37, 38) et de la deuxième bielle auxiliaire (27).

La charrue (1A) peut s'adapter à l'entrepneu du véhicule moteur (12) auquel elle est destinée à être liée (l'entrepneu étant la distance qui sépare les flancs intérieurs des roues du véhicule moteur (12)). A cet effet, le premier axe de pivotement avant (31) et le deuxième axe de pivotement avant (32) peuvent occuper plusieurs positions distinctes sur l'avant-train (2), chaque position correspondant à une plage respective d'entrepneus du véhicule moteur (12).

Pour ce faire, l'avant-train (2) comporte trois trous (40, 41, 42) destinés à recevoir le premier axe de pivotement avant (31) et le deuxième axe de pivotement avant (32). Les trois trous (40, 41, 42) étant situés, selon l'exemple représenté, au moins sensiblement sur la droite (D). Le trou intérieur (42) et le trou médian (40) servent pour un véhicule moteur (12) avec un entrepneu (E) plus large (figure 1), tandis que le trou médian (40) et trou extérieur (41) servent pour un véhicule moteur (12) avec un entrepneu (e) moins large (non représenté).

Les principaux réglages de cette charrue (1A) s'effectuent de la manière suivante.

Tout d'abord l'opérateur choisi la largeur de coupe. Selon l'exemple de réalisation représenté sur la figure 1, il peut choisir entre trois largeurs de coupe décrites précédemment. Si l'opérateur choisi par exemple la largeur de coupe la plus grande, telle que représentée sur la figure 1, l'opérateur pivote dans un premier temps chaque corps de labour (14) autour de son axe d'articulation (15) jusqu'à ce que le trou (19) des ailes (18, 18') collabore avec le trou (23) de la structure porteuse (13), il fixe ledit corps de labour (14) à ladite structure porteuse (13) en engageant la broche (17) dans les trous (19, 23) superposés.

Dans un deuxième temps, l'opérateur pivote l'arrière-train (3) autour du deuxième axe de pivotement (29) liant la bielle principale (25A) à l'arrière-train (3) jusqu'à ce que le trou (38) de la structure porteuse (13) puisse recevoir la broche (34) qui lie la deuxième bielle auxiliaire (27) à ladite structure porteuse (13) de l'arrière-train (3).

Ces deux opérations permettent de varier l'écartement entre les corps de labour (14) pour changer la largeur de coupe de chaque corps de labour (14) tout en conservant un parfait alignement de ces derniers par rapport à la direction d'avance (35).

Les deux autres réglages de la largeur de coupe s'effectuent d'une manière semblable.

Après le réglage de la largeur de travail de la charrue (1A), l'opérateur adapte ladite charrue (1A) à l'entrepneu (E, e) du véhicule moteur (12).

Pour ce faire, si par exemple le véhicule moteur (12) possède un entrepneu large (E) (figure 1), l'opérateur déplace l'arrière-train (3) orthogonalement à la direction d'avance (35) en le faisant pivoter autour du premier et du deuxième axe de pivotement (28, 29), jusqu'à ce que le trou médian (40) puisse recevoir le deuxième axe de pivotement (32) liant la deuxième bielle auxiliaire (27) à l'avant-train (2), et que le trou intérieur (42) puisse recevoir le premier axe de pivotement avant (31) liant la première bielle auxiliaire (26A) audit avant-train (2).

Lorsque le véhicule moteur (12) possède un entrepneu moins large (e) l'opérateur procède d'une manière similaire à celle décrite ci-dessus en liant la première et la deuxième bielle auxiliaire (26A, 27) à l'avant-train (2) via respectivement le trou médian (40) et le trou extérieur (41).

Ce réglage d'adaptation de la charrue (1A) à l'entrepneu (E, e) du véhicule moteur (12) s'effectue en général une fois pour un véhicule moteur (12) déterminé.

Ensuite, pour un bon équilibrage véhicule moteur (12) / charrue (1A), l'opérateur règle le déport latéral et le devers de pointe en agissant uniquement sur la première bielle auxiliaire (26A) qui est de longueur variable.

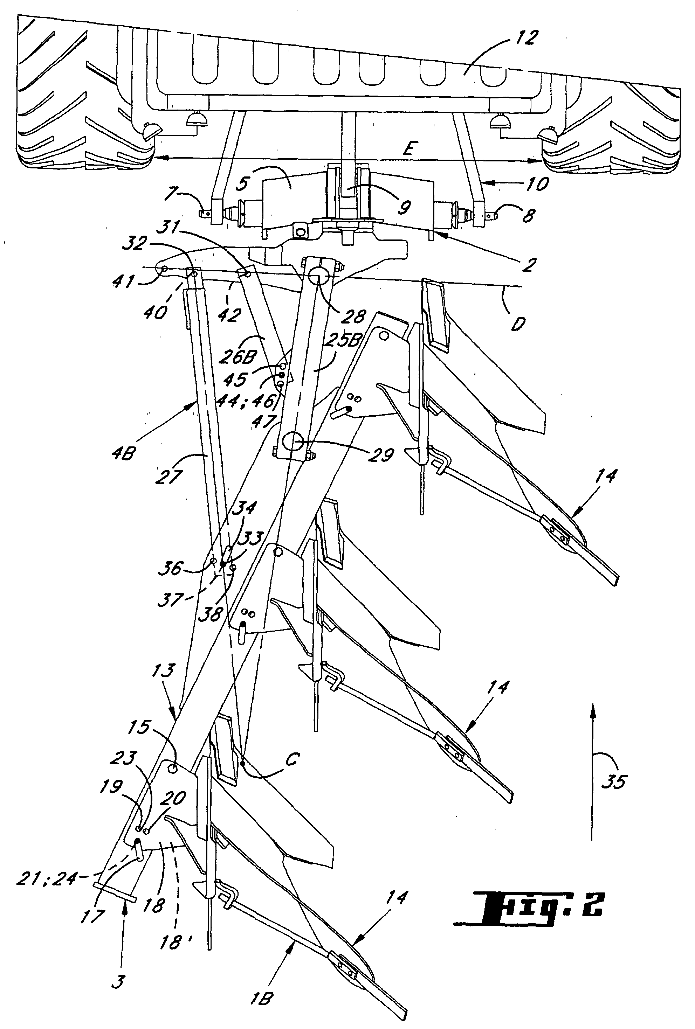

La figure 2 représente une autre forme de réalisation d'une charrue selon la présente idée inventive. Cette charrue (1B) comporte un certain nombre d'éléments qui ont été décrits précédemment. Ces éléments garderont par conséquent le même numéro de repère et ne seront pas redécrits. Elle comporte également un certain nombre d'éléments qui sont comparables à des éléments de la charrue (1A) décrites précédemment. Ces éléments seront affectés du même numéro de repère que ces éléments comparables de la charrue (1A) suivi de la lettre B. Ils ne seront décrits que si cela s'avère nécessaire.

Cette charrue (1B) selon une autre forme de réalisation est dans l'ensemble semblable à la charrue (1A) représentée sur la figure 1, sauf que la bielle auxiliaire (26B) est de longueur fixe. Le premier axe de pivotement arrière (44) peut être déplacé dans plusieurs positions distinctes sur ladite bielle principale (25B). A cet effet, la bielle principale (25B) comporte, selon l'exemple représenté, trois trous (45, 46, 47) correspondant chacun à une position de l'arrière train (3) et étant chacun destiné à recevoir le premier axe de pivotement arrière (44).

Par un simple déplacement du premier axe de pivotement arrière (44) le long de ladite bielle principale (25B), l'opérateur règle le déport latéral et le devers de pointe.

Finalement, différentes modifications restent possibles notamment en ce qui concerne la constitution des divers éléments ou par substitution d'équivalents techniques, ou encore par combinaison des différents exemples de réalisation représentés, sans pour autant sortir du domaine de protection défini dans les revendications.

C'est ainsi qu'il est parfaitement possible de réaliser une charrue réversible et/ou semi-portée ou traînée équipée d'un dispositif de liaison (4A ; 4B) tel que décrit précédemment.

Il est encore parfaitement imaginable de remplacer la deuxième bielle auxiliaire (27) par un vérin hydraulique qui est commandé à partir du véhicule moteur (12) de manière à pouvoir replier hydrauliquement la charrue lors du transport.

De la même manière, il est également envisageable de remplacer la première bielle auxiliaire (26A, 26B) par un autre vérin hydraulique qui est commandé à partir du véhicule moteur (12) de sorte à pouvoir régler à partir du véhicule moteur le déport latéral et le devers de pointe. En combinant un dispositif de liaison (4A ; 4B) décrit précédemment avec un mécanisme de commande connu qui fait pivoter chaque corps de labour (14) autour de l'axe d'articulation (15) correspondant et en remplaçant la deuxième bielle auxiliaire (27) par un vérin hydraulique, il est parfaitement possible de réaliser une charrue à largeur variable commandée à partir du véhicule moteur (12).

Il est encore possible de prévoir plus de trous (40, 41, 42) prévu sur l'avant-train (2) de manière à pouvoir adapter la charrue (1A ; 1B) à un nombre plus important d'entrepneus du véhicule moteur (12). Les trous (40, 41, 42) de l'avant-train (2) peuvent également être remplacés par un ou plusieurs trous oblongs de manière à pouvoir adapter la charrue à n'importe quel entrepneu du véhicule moteur (12) correspondant.

En outre, il est encore parfaitement possible de prévoir un plus grand nombre de trous (45, 46, 47) sur la bielle principale (25B) de la charrue (1B) ou de prévoir un trou oblong de manière à obtenir un réglage du déport latéral et du devers de pointe plus précis.

Il est en sus parfaitement possible que la première bielle auxiliaire (26B) comporte un certain nombre de trous ou un trou oblong destiné à recevoir le premier axe de pivotement arrière (44) pour le réglage du déport latéral et du devers de pointe.

## Revendications

1. Charrue comportant :
- un avant-train (2) destiné à être lié à un véhicule moteur (12),
- un arrière-train (3) comportant une structure porteuse (13) sur laquelle sont articulés des corps de labour (14) autour d'un axe d'articulation (15) respectif de sorte à pouvoir occuper au moins deux positions de largeur de coupe différentes,
- un dispositif de liaison (4A ; 4B) liant l'arrière-train (3) à l'avant-train (2) et comprenant :
* une bielle principale (25A ; 25B) articulée sur l'avant-train (2) autour d'un premier axe de pivotement (28) et sur l'arrière-train (3) autour d'un deuxième axe de pivotement (29), et
* une première bielle auxiliaire (26A ; 26B) articulée sur l'avant-train (2) autour d'un premier axe de pivotement avant (31), et une deuxième bielle auxiliaire (27) articulée sur l'avant-train (2) autour d'un deuxième axe de pivotement avant (32) et sur l'arrière-train (3) autour d'un deuxième axe de pivotement arrière (33),
les trois bielles (25A ; 25B; 26A ; 26B; 27) étant disposées de telle façon que la bielle principale (25A; 25B) converge vers l'arrière avec la deuxième bielle auxiliaire (27) en un point de convergence virtuel arrière (C),
***caractérisée en ce que :***
- la première bielle auxiliaire (26A ; 26B) est articulée sur la bielle principale (25A ; 25B) autour d'un premier axe de pivotement arrière (44),
- la deuxième bielle auxiliaire (27) est de longueur fixe et son deuxième axe de pivotement arrière (33) peut être placé dans au moins deux positions distinctes sensiblement centrées autour du deuxième axe de pivotement (29), chaque position de son deuxième axe de pivotement arrière (33) correspondant à une position de largeur de coupe respective des corps de labour (14).

2. Charrue selon la revendication 1, ***caractérisée en ce que*** la première bielle auxiliaire (26A) est de longueur réglable.

3. Charrue selon la revendication 1, ***caractérisée en ce que*** le premier axe de pivotement arrière (44) peut occuper plusieurs positions distinctes sur la bielle principale (25A ; 25B).

4. Charrue selon la revendication 1, ***caractérisée en ce que*** l'arrière-train (3) présente un certain nombre de trous (36, 37, 38) centrés autour du deuxième axe de pivotement (29) et destinés à recevoir le deuxième axe de pivotement arrière (33).

5. Charrue selon l'une des revendications 1 à 4, ***caractérisée en ce que*** le premier axe de pivotement avant (31) et le deuxième axe de pivotement avant (32) peuvent occuper plusieurs positions distinctes sur ledit avant-train (2), chaque position correspondant à une plage respective d'entrepneus (E ; e) de véhicules moteurs auxquels est destinée à être liée la charrue (1A ; 1B).

6. Charrue selon la revendication 5, ***caractérisée en ce que*** l'avant-train (2) comporte trois trous (40, 41, 42) destinés à recevoir le premier axe de pivotement avant (31) et le deuxième axe de pivotement avant (32), le trou intérieur (42) et le trou médian (40) servant pour un véhicule moteur avec un entrepneu (E) plus large, tandis que le trou médian (40) et le trou extérieur (41) servant pour un véhicule moteur avec un entrepneu (e) moins large.

7. Charrue selon l'une des revendications 1 à 6, ***caractérisée en ce que*** les différents axes de pivotement sont, en position de travail, sensiblement verticaux.

## Patentansprüche

1. Pflug, der
- ein Vordergestell (2) zur Verbindung mit einem Motorfahrzeug (12),
- ein Hintergestell (3), das ein Traggestell (13) aufweist, an dem Pflugkörper (14) um eine jeweilige Gelenkachse (15) so angelenkt sind, daß sie mindestens zwei Positionen unterschiedlicher Schnittbreite einnehmen können, und
- eine das Hintergestell (3) mit dem Vordergestell (2) verbindende Verbindungsvorrichtung (4A; 4B), die aus
* einer um eine erste Schwenkachse (28) an dem Vordergestell (2) und um eine zweite Schwenkachse (29) an dem Hintergestell (3) angelenkte Hauptverbindungsstange (25A; 25B) und
* einer um eine erste vordere Schwenkachse (31) an dem Vordergestell (2) angelenkte erste Hilfsverbindungsstange (26A; 26B) und einer um eine zweite vordere Schwenkachse (32) an dem Vordergestell (2) und um eine zweite hintere Schwenkachse (33) an dem Hintergestell (3) angelenkte zweite Hilfsverbindungsstange (27) besteht,
umfaßt, wobei die drei Verbindungsstangen (25A; 25B; 26A; 26B; 27) so angeordnet sind, daß die Hauptverbindungsstange (25A; 25B) mit der zweiten Hilfsverbindungsstange (27) in einem virtuellen hinteren Konvergierungspunkt (C) nach hinten konvergiert, ***dadurch gekennzeichnet,* daß**
- die erste Hilfsverbindungsstange (26A; 26B) um eine erste hintere Schwenkachse (44) an der Hauptverbindungsstange (25A; 25B) angelenkt ist,
- die zweite Hilfsverbindungsstange (27) fester Länge ist und ihre zweite hintere Schwenkachse (33) in mindestens zwei verschiedene, um die zweite Schwenkachse (29) im wesentlichen zentrierte Positionen angeordnet werden kann, wobei jede Position ihrer zweiten hinteren Schwenkachse (33) einer jeweiligen Schnittbreitenposition der Pflugkörper (14) entspricht.

2. Pflug nach Anspruch 1, ***dadurch gekennzeichnet,* daß** die erste Hilfsverbindungsstange (26A) eine einstellbare Länge aufweist.

3. Pflug nach Anspruch 1, ***dadurch gekennzeichnet,* daß** die erste hintere Schwenkachse (44) mehrere verschiedene Positionen an der Hauptverbindungsstange (25A; 25B) einnehmen kann.

4. Pflug nach Anspruch 1, ***dadurch gekennzeichnet,* daß** das Hintergestell (3) eine bestimmte Anzahl von Löchern (36, 37, 38) aufweist, die um die zweite Schwenkachse (29) zentriert sind und die zweite hintere Schwenkachse (33) aufnehmen sollen.

5. Pflug nach einem der Ansprüche 1 bis 4, ***dadurch gekennzeichnet,* daß** die erste vordere Schwenkachse (31) und die zweite vordere Schwenkachse (32) mehrere verschiedene Positionen an dem Vordergestell (2) einnehmen können, wobei jede Position einem jeweiligen Zwischenreifenabstandsbereich (E; e) von Motorfahrzeugen, mit denen der Pflug (1A; 1B) verbunden werden soll, entspricht.

6. Pflug nach Anspruch 5, ***dadurch gekennzeichnet,* daß** das Vordergestell (2) drei Löcher (40, 41, 42) aufweist, die die erste vordere Schwenkachse (31) und die zweite vordere Schwenkachse (32) aufnehmen sollen, wobei das Innenloch (42) und das Mittelloch (40) für ein Motorfahrzeug mit einem größeren Zwischenreifenabstand (E) verwendet werden, während das Mittelloch (40) und das Außenloch (41) für ein Motorfahrzeug mit einem weniger großen Zwischenreifenabstand (e) verwendet werden.

7. Pflug nach einem der Ansprüche 1 bis 6, ***dadurch gekennzeichnet,* daß** die verschiedenen Schwenkachsen in Arbeitsstellung im wesentlichen vertikal sind.

## Claims

1. Plough comprising:
- a headstock (2) intended to be connected to a motor vehicle (12),
- a rear frame (3) comprising a bearing structure (13) to which plough bodies (14) are articulated about a respective axis of articulation (15) so as to be able to occupy at least two positions of different cutting widths,
- a connecting device (4A; 4B) connecting the rear frame (3) to the headstock (2) and comprising:
* a main link rod (25A; 25B) articulated to the headstock (2) about a first pivot axis (28) and to the rear frame (3) about a second pivot axis (29), and
* a first auxiliary link rod (26A; 26B) articulated to the headstock (2) about a first front pivot axis (31), and a second auxiliary link rod (27) articulated to the headstock (2) about a second front pivot axis (32) and to the rear frame (3) about a second rear pivot axis (33),
the three link rods (25A; 25B; 26A; 26B; 27) being arranged in such a way that the main link rod (25A; 25B) converges towards the rear with the second auxiliary link rod (27) at a rear virtual point of convergence (C), ***characterized in* that**:
- the first auxiliary link rod (26A; 26B) is articulated to the main link rod (25A; 25B) about a first rear pivot axis (44),
- the second auxiliary link rod (27) is of a fixed length and its second rear pivot axis (33) can be placed in at least two distinct positions which are substantially centred about the second pivot axis (29), each position of its second rear pivot axis (33) corresponding to a respective cutting-width position of the plough bodies (14).

2. Plough according to Claim 1, ***characterized in* that** the first auxiliary link rod (26A) is of adjustable length.

3. Plough according to Claim 1, ***characterized in* that** the first rear pivot axis (44) can occupy several different positions on the main link rod (25A; 25B).

4. Plough according to Claim 1, ***characterized in* that** the rear frame (3) has a certain number of holes (36, 37, 38) centred around the second pivot axis (29) and intended to accommodate the second rear pivot axis (33).

5. Plough according to one of Claims 1 to 4, ***characterized in* that** the first front pivot axis (31) and the second front pivot axis (32) can occupy several distinct positions on the said headstock (2), each position corresponding to a respective range of spacings (E; e) between the tyres of the motor vehicles to which the plough (1A; 1B) is intended to be connected.

6. Plough according to Claim 5, ***characterized in* that** the headstock (2) comprises three holes (40, 41, 42) intended to accommodate the first front pivot axis (31) and the second front pivot axis (32), the inner hole (42) and the middle hole (40) being used for a motor vehicle with a larger spacing (E) between tyres, while the middle hole (40) and the outer hole (41) are used for a motor vehicle with a narrower spacing (e) between the tyres.

7. Plough according to one of Claims 1 to 6, ***characterized in* that** the various pivot axes are substantially vertical in the work position.
